(19) **Europäisches Patentamt**

**European Patent Office**

**Office européen des brevets**

(11) **EP 0 836 077 B1**

(12) **EUROPÄISCHE PATENTSCHRIFT**

(45) Veröffentlichungstag und Bekanntmachung des Hinweises auf die Patenterteilung:
**11.09.2002 Patentblatt 2002/37**

(51) Int Cl.⁷: **G01D 5/245**, G01D 18/00

(21) Anmeldenummer: **97117011.3**

(22) Anmeldetag: **01.10.1997**

(54) **Kontrollvorrichtung und Verfahren zur Prüfung von positionsabhängigen Abtastsignalen**

Device and method for testing position dependent signals

Dispositif et procédé pour contrôler les signaux dépendants de la position

(84) Benannte Vertragsstaaten:
**DE FR GB IT**

(30) Priorität: **12.10.1996 DE 19642200**

(43) Veröffentlichungstag der Anmeldung:
**15.04.1998 Patentblatt 1998/16**

(73) Patentinhaber: **Dr. Johannes Heidenhain GmbH 83292 Traunreut (DE)**

(72) Erfinder:
• **Holzapfel, Wolfgang, Dr. 83119 Obing (DE)**
• **Huber, Alois, Dipl.-Ing. 83365 Nussdorf (DE)**
• **Bernard, Robert, Dipl.-Ing. 84518 Garching/ALz (DE)**

(56) Entgegenhaltungen:
**EP-A- 0 292 151      EP-A- 0 555 507**

**Beschreibung**

Die Erfindung betrifft eine Kontrollvorrichtung und ein Verfahren zur Prüfung von positionsabhängigen Abtastsignalen einer Positionsmeßeinrichtung.

Die Prüfung der Abtastsignale ist insbesondere bei der Montage einer Positionsmeßeinrichtung erforderlich. Die Signalqualität und Meßgenauigkeit ist erheblich von der exakten Justierung des Abtastkopfes relativ zum Maßstab abhängig. Um bei inkrementalen Positionsmeßsystemen eine hohe Meßgenauigkeit zu gewährleisten, sollen die beiden vom Abtastkopf erzeugten Abtastsignale eine hohe und gleiche Amplitude sowie einen gegenseitigen Phasenversatz von 90° aufweisen. Die Amplitude wird vom Abstand zwischen Abtastkopf und Maßstab und der Phasenversatz von der Verkippung des Abtastkopfes relativ zur Meßrichtung beeinflußt.

Bei inkrementalen Positionsmeßsystemen sind neben der inkrementalen Teilung noch Referenzmarken auf dem Maßstab aufgebracht. Bei der Abtastung einer Referenzmarke wird ein analoges Referenzmarkensignal erzeugt, welches eine Referenzposition definiert. In der Regel wird beim Auftreten des Maximums des Referenzmarkensignals von einem Zähler eine abgespeicherte absolute Referenzposition übernommen und dieser übernommene Wert wird durch die inkrementale Positionsmessung laufend aktualisiert. Ein inkrementaler Zählschritt ist dabei nur ein Bruchteil einer Teilungsperiode der Teilung. Aus diesem Grund ist es besonders wichtig, daß das Referenzmarkensignal möglichst gut einem bestimmten Zählschritt - also Bruchteil der Teilungsperiode - zugeordnet ist. Durch eine Verschwenkung des Abtastkopfes wird diese Zuordnung erheblich beeinflußt.

Die Parameter der analogen inkrementalen Abtastsignale können mit einem Oszilloskop dargestellt werden. Hierzu werden die beiden um 90° gegeneinander phasenverschobenen Abtastsignale den beiden Kanälen eines Zweistrahl-Oszilloskops zugeführt, so daß am Bildschirm eine Lissajous-Figur erzeugt wird. Der Radius der Lissajous-Figur ist ein Maß für die Amplituden sowie die Phasenbeziehung beider Abtastsignale.

Um die Prüfung von positionsabhängigen Abtastsignalen zu vereinfachen, wurde in der WO 90/02956 eine Kontrollvorrichtung mit einer Balkenanzeige vorgeschlagen. In dieser Kontrollvorrichtung wird aus den momentanen Amplituden der Abtastsignale ein Radius der Lissajous-Figur errechnet und dieser momentane Radiuswert als leuchtende Stelle auf einer Balkenanzeige dargestellt.

Diese Kontrollvorrichtung ist gegenüber einem Oszilloskop zwar leichter handzuhaben, eine exakte Kontrolle der Parameter der Abtastsignale ist aber nicht möglich.

Bei der Montage des Abtastkopfes relativ zum Maßstab kann die Amplitude der Abtastsignale Werte von Null bis zu einem Maximum erreichen, beispielsweise 0µA bis 12µA. Dieser relativ große Bereich von 12µA muß zur Prüfung der Abtastsignale kontrolliert und somit angezeigt werden können. Das bedeutet zwangsläufig, daß die Auflösung der Anzeige bei einer noch gut handhabbaren und nicht zu langen Balkenanzeige sehr gering ist. Diese geringe Auflösung hat den Nachteil, daß die Schwankungsbreite des Radius der Lissajous-Figur nicht mit ausreichender Auflösung und Genauigkeit dargestellt werden kann, wenn jeweils nur der momentane Radiuswert als leuchtender Punkt erscheint. Eine Prüfung des Referenzmarkensignals ist nicht angegeben.

Die Firma RENISHAW vertreibt eine Kontrollvorrichtung zur Prüfung von positionsabhängigen Abtastsignalen. Diese Kontrollvorrichtung mit der Bezeichnung RGSUE weist Merkmale gemäß der WO 90/02956 auf. Darüber hinaus besitzt diese Kontrollvorrichtung ein Anzeigefeld zur Anzeige der Lage einer Referenzmarke. In der Betriebsanleitung ist dazu ausgeführt, daß mit der Anzeige die Erkennung der Referenzmarke überprüft werden kann. Zur Einstellung der Lage einer Referenzmarke ist eine Verstellschraube vorgesehen. Bei korrekter Lageeinstellung der Referenzmarke leuchtet auf der Anzeige eine grüne LED, bei einer Fehlausrichtung eine gelbe oder rote LED auf. Die Verstellschraube ist in eine einzige Richtung zu verdrehen, wenn die gelbe oder rote LED leuchtet. Diese Kontrollvorrichtung hat den Nachteil, daß sie den Bediener bei der Justierung des Abtastkopfes - insbesondere während des Anbaus - ungenügend unterstützen kann.

Dieser Nachteil gilt auch für die Einrichtung gemäß der EP 0 514 081 B1, in der Mittel vorgesehen sind, um zu überprüfen, ob die Referenzmarke in einem gewünschten Bereich der um 90° gegeneinander phasenverschobenen Abtastsignale auftritt.

Der Erfindung liegt die Aufgabe zugrunde, eine Kontrollvorrichtung und ein Verfahren zur Prüfung von positionsabhängigen Abtastsignalen anzugeben, mit der/dem Parameter der Abtastsignale mit ausreichend hoher Auflösung und Genauigkeit angezeigt werden können, um dem Bediener eine Justierung des Abtastkopfes zu erleichtern.

Diese Aufgabe wird durch eine Kontrollvorrichtung mit den Merkmalen des Anspruches 1 sowie einem Verfahren mit den Merkmalen des Anspruches 7 gelöst.

Vorteilhafte Ausgestaltungen sind in den abhängigen Ansprüchen angegeben.

Die Vorteile der erfindungsgemäßen Kontrollvorrichtung sind besonders darin zu sehen, daß besonders wichtige Parameter der Abtastsignale besser erkannt werden können und dadurch eine gute Qualität der Abtastsignale mit einfachen Mitteln erreicht werden kann. Weiterhin wird die Justierung des Abtastkopfes beim Anbau erleichtert, indem angezeigt wird, in welche Richtungen der Abtastkopf zu bewegen und zu verschwenken ist.

Ausführungsbeispiele der Erfindung sind in den Figuren dargestellt, es zeigt:

Figur 1      ein Positionsmeßsystem mit einer erfindungsgemäßen Kontrollvorrichtung,

Figur 2      eine Lissajous-Figur,

Figur 3      ein erstes Beispiel eines Anzeigebereiches der Kontrollvorrichtung,

Figur 4      ein zweites Beispiel eines Anzeigebereiches der Kontrollvorrichtung,

Figur 5 und 6      zwei Zustände eines dritten Beispiels eines Anzeigebereiches der Kontrollvorrichtung,

Figur 7      zwei Stellungen eines Abtastkopfes,

Figur 8      zwei um 90° phasenverschobene Abtastsignale,

Figur 9      ein Referenzmarkensignal,

Figur 10      verschiedene Bereiche der Abtastsignale und des Referenzmarkensignals,

Figur 11      einen Anzeigebereich der Kontrollvorrichtung zur Darstellung der Lage des Referenzmarkensignals und

Figur 12 bis 15      mehrere Zustände verschiedener Anzeigeeinrichtungen.

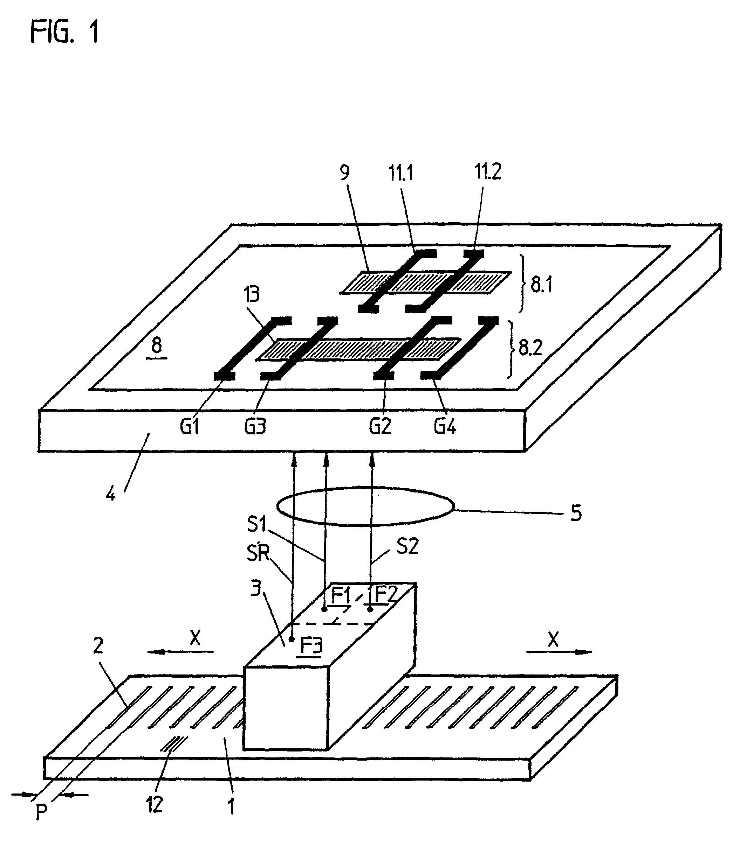

Ein Maßstab 1 mit einer inkrementalen Teilung 2 wird gemäß Figur 1 von einem Abtastkopf 3 abgetastet. Während des Meßbetriebes sollen die Abtastelemente F1, F2 - beispielsweise Fotoelemente - des Abtastkopfes 3 zwei um 90° gegeneinander phasenverschobene analoge Abtastsignale S1, S2 ausgeben. Diese Abtastsignale S1, S2 werden in einer Unterteilungseinheit interpoliert, um einen Positionsmeßwert zu erhalten, dessen Auflösung besser ist als eine Teilungsperiode P der inkrementalen Teilung 2. Um eine Interpolation mit hoher Genauigkeit zu gewährleisten, ist es erforderlich, daß die analogen Abtastsignale S1, S2 exakt um 90° gegeneinander phasenverschoben sind, eine möglichst hohe Signalamplitude A aufweisen und die Signalamplituden A1, A2 beider Abtastsignale S1=A1 sin wt; S2=A2 cos wt möglichst gleich sind. Die analogen Abtastsignale S1, S2 werden einer Kontrollvorrichtung 4 zugeführt, mit der diese Parameter (Phasenlage, Amplitude) besonders effektiv überprüft werden können.

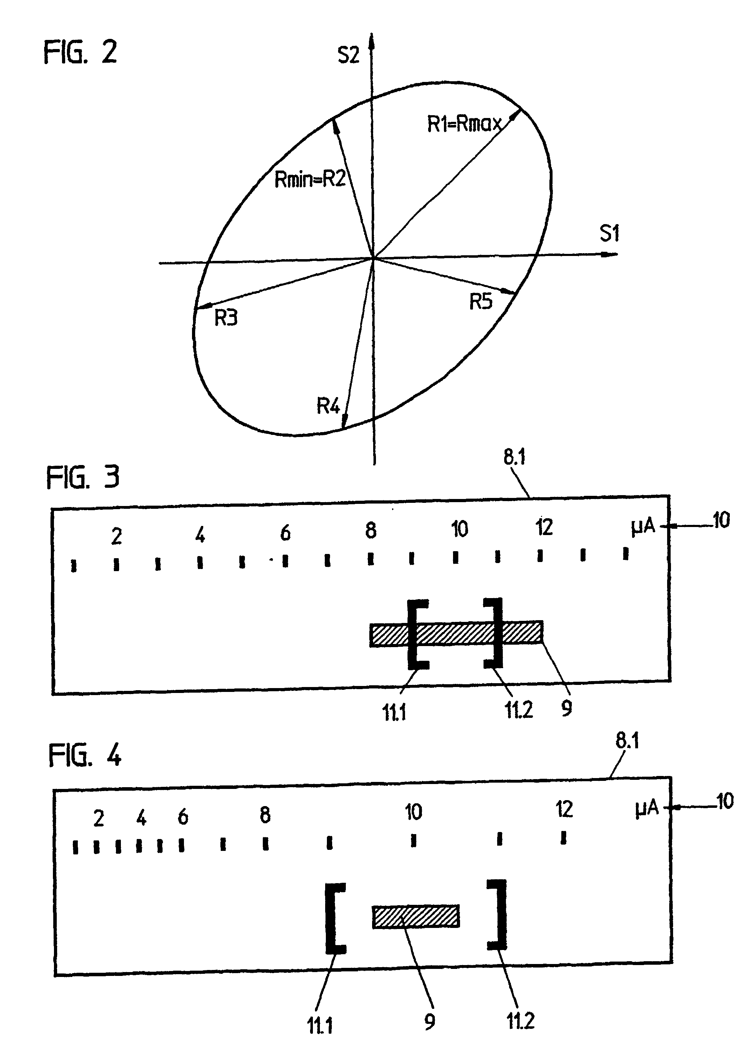

Zur Darstellung der Parameter der beiden Abtastsignale S1, S2 ist in der Kontrollvorrichtung 4 ein erster Bereich 8.1 eines Anzeigefeldes 8 vorgesehen. Angezeigt wird der Radius R einer in Figur 2 gezeigten Lissajous-Figur. Hierzu werden laufend nacheinander mehrere Wertepaare (Signalamplituden) beider Abtastsignale S1, S2 übernommen und aus jedem Wertepaar jeweils der momentane Radius R1 bis R5 der Lissajous-Figur nach folgender Beziehung errechnet:

$$R = \sqrt{S1^2 + S2^2}$$

Aus einer bestimmten Anzahl von aufeinanderfolgend berechneten und abgespeicherten Radius-Werten R1 bis R5 wird jeweils der minimale $R_{min}$ und der maximale Wert $R_{max}$ ermittelt und auf dem Anzeigefeld 8 ein kontinuierlicher Balken 9 zwischen diesen beiden Extemwerten $R_{max}$ und $R_{min}$ angezeigt. Besonders vorteilhaft dabei ist, wenn sichergestellt ist, daß bei der Gruppe der errechneten Radius-Werte R1 bis R5 aus der jeweils $R_{max}$ und $R_{min}$ bestimmt wird, zumindest jeweils ein Radius-Wert R innerhalb eines der vier Quadranten der Lissajous-Figur liegt. Um dies zu überwachen, können die Radius-Werte einer Prüfung unterzogen werden, wobei $R_{max}$ und $R_{min}$ erst errechnet wird, wenn zumindest je ein Wert innerhalb eines Quadranten liegt.

Ein erstes Beispiel der Anzeige eines derartigen Balkens 9 ist in Figur 3 im Detail dargestellt. Bei einer Relativerschiebung des Abtastkopfes 3 relativ zum Maßstab 1 in Meßrichtung X wurden in einem vorgegebenen Zeitraster mehrere Meßwerte für den Radius R ermittelt, die Kontrollvorrichtung 4 ermittelt aus diesen Meßwerten den Minimalwert $R_{min}=8\mu A$ und den Maximalwert $R_{max}=12\mu A$. Daraufhin wird ein durchgehender Balken 9 von 8 bis 12μA im Anzeigefeld 8 angezeigt. Ändert sich $R_{min}$ und $R_{max}$ bei den nachfolgenden Messungen und Berechnungen neuer Radius-Werte R, so ändert sich auch der Bereich des Balkens 9.

Im Anzeigefeld 8 wird bei dem dargestellten Beispiel auch ein Maß 10 für den Radius R angezeigt, im Beispiel 1 bis 14μA.

Besonders vorteilhaft ist es, wenn im Anzeigefeld 8 weiterhin eine Markierung 11 für die Sollbreite des Balkens 9, also für die zulässige Toleranz der Schwankungsbreite des Radius R erscheint. Im dargestellten Beispiel ist dies eine Klammer 11.1 und 11.2. Ist beispielsweise die zulässige Toleranz ±10%, so wird die linke, dem Balken 9 überlagerte Klammer 11.1 bei 9μA, und die rechte, dem Balken 9 überlagerte Klammer 11.2 bei 11μA angezeigt. Anstelle der Klammern 11.1 und 11.2 können auch andere Markierungen dargestellt werden. Die Lage der Klammern 11.1, 11.2 errechnet sich nach folgendem Schema:

     a) Berechnen eines Mittelwertes RM aus mehreren aufeinanderfolgenden Radius-Werten R. Der Mittelwert RM kann der arithmetische Mittelwert aus mehreren Radius-Werten R sein, oder der Wert $(R_{max}+R_{min})/2$.

     b) Berechnen der Lage der linken Klammer 11.1, indem (RM-10% von RM) errechnet wird. Im Beispiel ist RM=10µA und somit die zulässige Schwankungsbreite des Radius R=±1µA, so daß die linke Klammer 11.1 bei 9µA dargestellt wird.

c) Berechnen der Lage der rechten Klammer 11.2, indem (RM+10% von RM) errechnet wird. Im Beispiel ergibt sich dafür 11µA.

Da die zulässig Toleranz in %, das heißt relativ vorgegeben ist, ändert sich der eingeschlossene Bereich zwischen rechter und linker Klammer 11.1, 11.2 in Abhängigkeit vom momentanen Mittelwert RM.

Bei der Prüfung der Positionsmeßeinrichtung - insbesondere während des Anbaus des Abtastkopfes 3 - wird die Ausgangleitung 5 des Abtastkopfes 3 mit der Kontrollvorrichtung 4 verbunden. Der Abstand des Abtastkopfes 3 zum Maßstab 1 sowie die winkelmäßige Ausrichtung des Abtastkopfes 3 ist korrekt, wenn der Balken 9 möglichst weit rechts des Anzeigefeldes 8 erscheint und eine Breite aufweist, die innerhalb der Klammern 11.1, 11.2 liegt.

Zusätzlich zu der Markierung 10 kann auch noch eine weitere Markierung für den berechneten Mittelwert RM angezeigt werden. Beispielsweise ein Strich, Punkt oder Pfeil beim Wert 10µA.

In Figur 4 ist ein weiteres Beispiel der Kontrollvorrichtung 4 dargestellt. Innerhalb des Anzeigefeldes 8 wird wiederum ein Maß 10 für den Radius angezeigt. Dieses Maß 10 sind Wertangaben von 0 bis 12µA. Wesentlich bei diesem Beispiel ist die Spreizung des Anzeigebereiches im besonders wichtigen Bereich des Soll-Wertes, also insbesondere im Bereich von 8 bis 12µA. Diese vergrößerte Darstellung innerhalb eines begrenzten Bereiches erleichtert die Feinjustierung des Abtastkopfes 3. Kleine Abweichungen und Änderungen von der Soll-Lage des Balkens 9 (z.B. bei 10µA) werden schneller erkannt. Insbesondere kann die Schwankungsbreite des Radius - also die Breite des Balkens - besonders deutlich dargestellt werden und dadurch eine sehr gute Amplitudengleichheit der beiden Abtastsignale S1, S2 eingestellt werden.

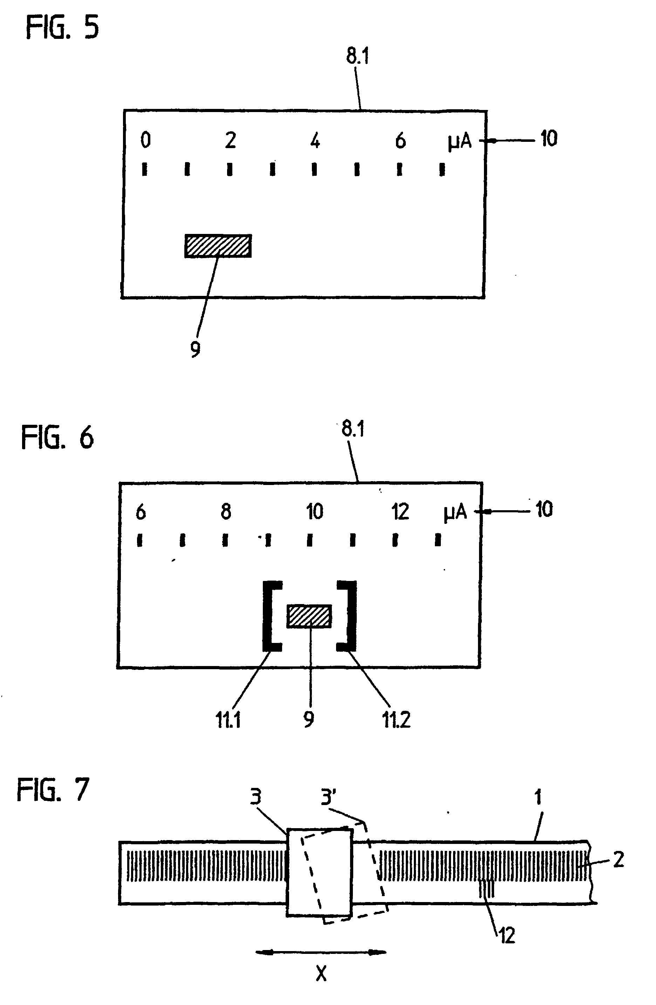

In Figur 5 und 6 ist ein weiteres Beispiel der Erfindung dargestellt. Das Anzeigefeld 8 kann besonders klein ausgebildet werden, wenn in der Kontrollvorrichtung 4 eine Umschalteinrichtung integriert ist, die eine Umschaltung des Anzeigefeldes 8 veranlaßt. Liegt der maximal erfaßte Radius-Wert $R_{max}$ unterhalb eines Grenzwertes von beispielsweise 7µA, wird im Anzeigefeld 8 als Maß 10 ein Wertebereich von 0 bis 7µA angezeigt, sowie der Balken 9 innerhalb der ermittelten Werte $R_{min}$ und $R_{max}$. Wird von der Kontrollvorrichtung 4 erkannt, daß der minimale Radius $R_{min}$ oberhalb eines Grenzwertes von beispielsweise 6µA liegt, so wird innerhalb des gleichen Anzeigefeldes 8 als Maß 10 ein Wertebereich von 6 bis 12µA angezeigt, sowie der Balken 9 und die Klammern 11.1, 11.2, wie bei den vorhergehenden Beispielen erläutert. Wesentlich bei diesem Ausführungsbeispiel ist die Umschaltung der Anzeige in Abhängigkeit der momentanen Lage des Balkens 9. Die Umschaltung kann in Abhängigkeit des erfaßten Momentanwertes von R, in Abhängigkeit von $R_{min}$ bzw. $R_{max}$ mehrerer erfaßter Radius-Werte R oder in Abhängigkeit eines berechneten Mittelwertes RM aus mehreren Radius-Werten erfolgen. Besonders vorteilhaft ist es, wenn im ersten Zustand (Figur 5) von der Anzeige ein unterer Bereich von Radius-Werten angezeigt wird, in dem die Amplituden der Abtastsignale S1, S2 unzureichend sind, und im zweiten Zustand (Figur 6) ein oberer Bereich von Radius-Werten angezeigt wird, in dem die Amplituden der Abtastsignale S1, S2 einen ausreichenden Wert erreicht haben. In diesem zweiten Zustand kann dann in dem Anzeigefeld 8 die Schwankungsbreite des Radius besonders beobachtet und genau eingestellt werden. Aus diesem Grund ist es auch möglich, daß das Maß 10 und somit die sich ändernde Lage und die Schwankungsbreite des Balkens 9 im zweiten Zustand gegenüber dem ersten Zustand vergrößert dargestellt wird.

Bei allen Ausführungsbeispielen ist es weiterhin möglich, daß die Schwankungsbreite - also die Breite des Balkens 9 - gegenüber der Lage bzw. der Lageänderung vergrößert dargestellt wird. An einem Beispiel erläutert bedeutet dies, daß bei ermittelten Radius-Werten $R_{min}$=9µA und $R_{max}$=11µA der Mittelwert RM=10µA errechnet wird und die mittlere Lage des Balkens 9 auch bei 10µA dargestellt wird. Die vergrößerte Darstellung der Schwankungsbreite wird realisiert, indem die Breite des Balkens 9 um einen Faktor, beispielsweise 2, breiter dargestellt wird, das linke Ende somit bei RM-2 (RM-$R_{min}$)=8µA und das rechte Ende bei RM+2 ($R_{max}$-RM)=12µA

Wie anhand der drei Beispiele der Anzeigefelder 8 beschrieben, stellt die Breite des Balkens 9 die Abweichung (Schwankungsbreite) zwischen mehreren Radius-Werten R dar. Diese Abweichung kann die Differenz zwischen $R_{max}$ und $R_{min}$, aber auch beispielsweise die Standardabweichung zwischen mehreren Radius-Werten R sein.

Der Balken 9 kann auch ohne Maßangabe 10 angezeigt werden, so daß der Bediener nur darauf zu achten hat, daß der Balken 9 möglichst weit rechts (oben) zu liegen kommt und möglichst schmal ist.

Der Balken 9 kann auch derart angezeigt werden, daß seine Lage in einer Richtung des Anzeigefeldes 8 den mittleren Radius RM angibt und die Breite des Balkens in der dazu senkrechten Richtung des Anzeigefeldes 8 die Schwankungsbreite (Abweichung) des Radius R angibt.

Bei der Montage und Ausrichtung des Abtastkopfes 3 hat sich gezeigt, daß es vorteilhaft ist, wenn während der Grobjustage möglichst schnell der aktuelle Balken 9 angezeigt wird und bei der Feinjustage der Balken 9 möglichst genau angezeigt wird. Aus diesem Grund wird die Schwankungsbreite bei Radius-Werten unterhalb eines vorgegebenen Wertes - z.B. 50% des Soll-Wertes - aus einer geringeren Anzahl (z.B. 5 Werte) von Radius-Werten und oberhalb dieses vorgegebenen Wertes aus einer großen Anzahl (z.B. 20 Werte) von Radius-Werten berechnet.

Aus Figur 1 ist ersichtlich, daß auf dem Maßstab 1 auch eine Referenzmarke 12 aufgebracht ist. Diese Referenzmarke 12 besteht in bekannter Weise aus einer unregelmäßigen Folge von Strichen, bei deren Abtastung mit einem Abtastelement F3 ein Referenzmarkensignal SR mit einem möglichst hohen Signalniveau entsteht. Die Referenzmarke 12 ist bereits bei der Herstellung des Maßstabes 1 einem vorgegebenen Bereich einer bestimmten Teilungsperiode zugeordnet. Besonders vorteilhaft ist es, wenn die Referenzmarke 12 in einem fotolithografischen Prozeß auf dem Maßstab 1 aufgebracht ist.

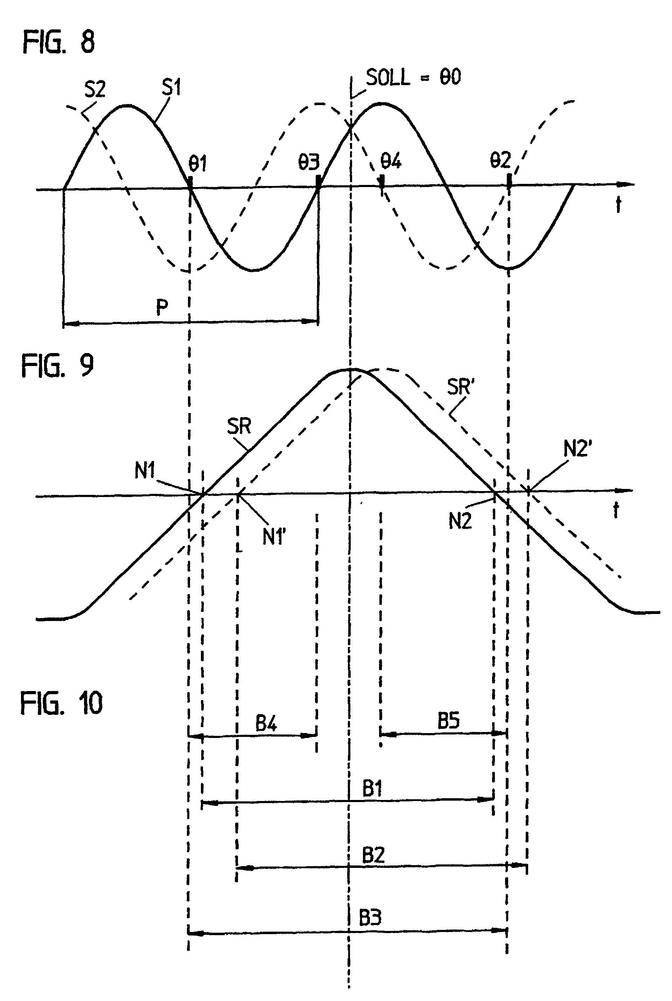

Durch die bei der Herstellung des Maßstabes erzeugte eindeutige Lagezuordnung der Referenzmarke 12 relativ zu einem vorgegebenen Bereich einer bestimmten Teilungsperiode der Teilung 2 ist noch nicht gewährleistet, daß auch das Referenzmarkensignal SR eine eindeutige Lagezuordnung zu den Abtastsignalen S1, S2 aufweist. Der Grund dafür ist, daß der abge-tastete Ort auf dem Maßstab 1 zur Bildung der Abtastsignale S1, S2 vom Ort der Referenzmarke 12 beabstandet ist, so daß bei einer Verkippung des Abtastkopfes 3 relativ zum Maßstab 1 sich die Lagezuordnung des Referenzmarkensignals SR ändert. Um dies zu verdeutlichen, ist in Figur 7 der Abtastkopf 3 in einer korrekten Ausrichtung und der gleiche Abtastkopf 3' in einer verkippten Lage dargestellt. Zur vereinfachten Erläuterung wird angenommen, daß sich die in Figur 8 gezeigten analogen Abtastsignale S1, S2 dabei nicht ändern. In Figur 9 ist dargestellt wie sich bei einer Verkippung das Referenzmarkensignal SR relativ zu den Abtastsignalen S1, S2 ändert. Die durchgezogene Linie stellt das Referenzmarkensignal SR bei korrekter Ausrichtung des Abtastkopfes 3 und die gestrichelte Linie stellt das Referenzsignal SR' bei verkipptem Abtastkopf 3' dar. Die Soll-Lage des Maximums von SR relativ zu den analogen Abtastsignalen S1, S2 ist durch die Linie Soll=$\theta 0$ bezeichnet.

Aus den Figuren 7 bis 9 ist ersichtlich, daß eine korrekte Ausrichtung des Abtastkopfes 3 erforderlich ist, damit das Referenzmarkensignal SR symmetrisch zu Soll=$\theta 0$ liegt. Um diese Ausrichtung dem Bediener zu vereinfachen, ist gemäß der Erfindung auf dem Anzeigefeld 8 ein Anzeigebereich 8.2 vorgesehen, in dem die Lage des Referenzmarkensignals SR relativ zu den Abtastsignalen S1, S2 angezeigt wird. Bei der Bewegung des Abtastkopfes 3 relativ zum Maßstab 1 in Meßrichtung X wird die Lage des Referenzmarkensignals SR ermittelt und abgespeichert. Die angezeigte Lage steht somit auch nach dem Überfahren der Referenzmarke 12 dem Anwender zur Analyse zur Verfügung. Die Breite B1 des Referenzmarkensignals SR wird in Form eines Balkens 13 angezeigt und die Lage des Referenzmarkensignals SR wird durch die Lage des Balkens 13 innerhalb des zweiten Anzeigebereiches 8.2 des Anzeigefeldes 8 dargestellt.

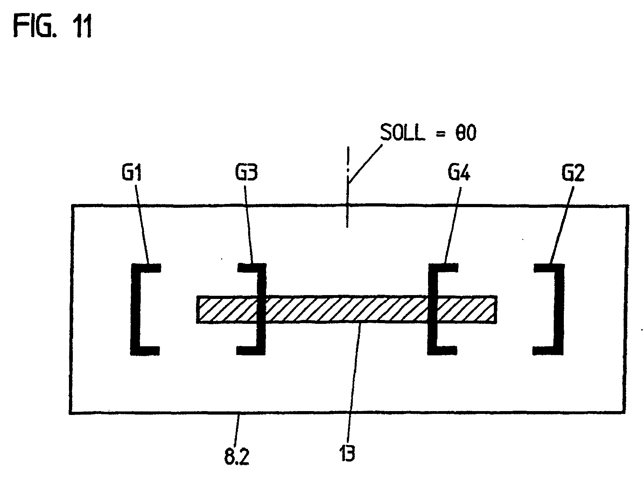

Dieser zweite Anzeigebereich 8.2 ist in Figur 11 im Detail gezeigt. Die dargestellte Symmetrielinie Soll bestimmt die mittlere Soll-Lage des Referenzmarkensignals SR, diese Linie entspricht der Bezugslinie Soll=$\theta 0$ in den Figuren 8 bis 10. Am Anzeigefeld 8 kann an dieser Stelle eine Markierung vorgesehen oder angezeigt werden. Zur Bestimmung der Relativlage der Nulldurchgänge N1 und N2 des Referenzmarkensignals SR wird beispielsweise der Abstand zwischen der Bezugsphasenlage $\theta 0$ und N1 sowie $\theta 0$ und N2 ermittelt. Diese Ermittlung kann durch Zeitmessung erfolgen oder aus den Ampliltudenwerten der Abtastsignale S1, S2. Die Zeitmessung erfolgt in der Art, daß ein Zähler mit hoher Taktfrequenz getaktet wird und die Zählerstände zum Zeitpunkt N1 sowie $\theta 0$ und N2 festgehalten werden. Aus dem Vergleich der Zählerstände, die bei N1 und N2 übernommen wurden, kann die Breite, aus dem Vergleich der Zählerstände, die bei N1 und $\theta 0$ übernommen wurden, kann die linke Kante und aus dem Vergleich der Zählerstände, die bei N2 und $\theta 0$ übernommen wurden, kann die rechte Kante des Balkens 13 ermittelt werden. Bei der Ermittlung der Breite und der Lage des Balkens 13 aus den Amplitudenwerten von S1 und S2 bei $\theta 0$, N1 und N2 wird ausgenutzt, daß das Verhältnis der Amplitudenwerte die Absolutposition innerhalb einer Periode P eindeutig bestimmt. Die Nulldurchgänge N1, N2 werden durch Vergleich (Triggerung) des Referenzmarkensignals SR mit einer vorgegebenen Schwelle bestimmt. Im dargestellten Beispiel ist die Schwelle die Zeitachse t.

Besonders vorteilhaft ist es, wenn innerhalb des Anzeigefeldes 8.2 auch zulässige und/oder unzulässige Bereiche B4, B5 für die Lage des Balkens 13 angezeigt werden. Die Grenzen dieser Bereiche B4, B5 werden aus den Abtastsignalen S1, S2 bestimmt und können durch definierte Phasenlagen $\theta 1$ bis $\theta 4$ vorgegeben werden. Im dargestellten Beispiel soll der linke Nulldurchgang N1 im Bereich B4 zwischen $\theta 1$ bis $\theta 3$ sowie der rechte Nulldurchgang N2 im Bereich B5 zwischen $\theta 4$ und $\theta 2$ liegen. Diese Bereiche B4, B5 sind in Figur 10 dargestellt. Die Grenzen dieser Bereiche B4, B5 werden im Anzeigefeld 8.2 als Markierungen G1 bis G4 angezeigt. Zur Ermittlung der Lage und Breite des Balkens 13 relativ zu diesen vorgegebenen Phasenlagen $\theta 1$ bis $\theta 4$ und somit relativ zu den Markierungen G1 bis G4 kann die vorher beschriebene Zeitmessung zwischen den Positionen $\theta 1$, N1, $\theta 3$, $\theta 4$, N2 und $\theta 2$ oder Amplitudenmessung benutzt werden.

In Figur 10 ist mit B1 ein Bereich zwischen N1 und N2 dargestellt, der die Breite des Balkens 13 bestimmt. Der Bereich B2 zeigt die Lage der Nulldurchgänge N1' und N2' bei einer Verkippung des Abtastkopfes 3'. Mit B3 ist der Bereich zwischen den zulässigen Grenzen $\theta 1$ und $\theta 2$ bezeichnet.

Die Lage des Balkens 13 kann auch innerhalb des Anzeigebereiches 8.2 unabhängig von der momentanen Bewegungsrichtung des Abtastkopfes 3 relativ zum Maßstab 1 angezeigt werden. Das bedeutet, daß das rechte Ende des Balkens 13 unabhängig von der Bewegungsrichtung die Lage des rechten Bereiches der Referenzmarke 12 anzeigt und das linke Ende des Balkens 13 die Lage des linken Bereiches der Referenzmarke 12. Erreicht wird dies dadurch, indem man die Richtung der Bewegung des Abtastkopfes 3 detektiert und davon abhängig N1 als rechte oder linke Kante des Balkens 13 und N2 als linke oder rechte Kante des Balkens 13 anzeigt. Der Balken 13 wird somit beispielsweise bei positiver Bewegungsrichtung nach der in den Figuren 8 bis 10 beschriebenen Art ermittelt und angezeigt. Wird dagegen eine negative Bewegungsrichtung erkannt, werden die Nulldurchgänge N1, N1' und N2, N2' vertauscht angezeigt. Man erhält somit aus der zeitlichen Zuordnung eine eindeutige und korrekte örtliche Zuordnung.

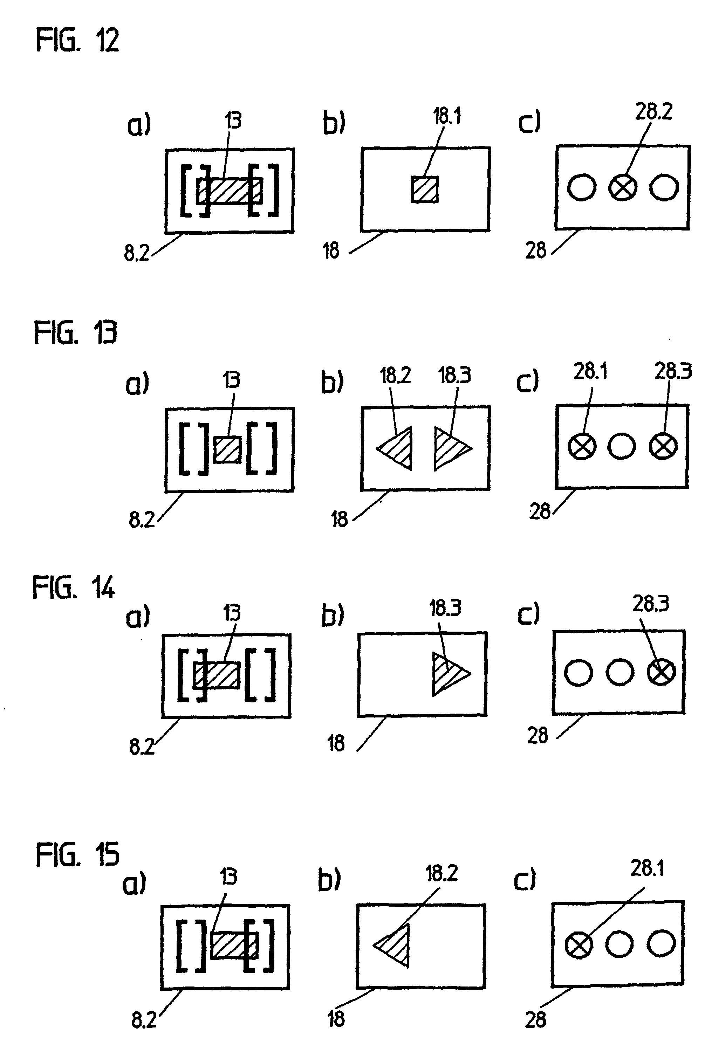

In den Figuren 12 bis 15 sind verschiedene Anzeigefelder zur Darstellung der Lage des Referenzmarkensignals SR gezeigt.

Figur 12a zeigt den bereits beschriebenen Anzeigebereich 8.2 des Anzeigefeldes 8 bei korrekter Lage des Referenzmarkensignals SR. Diese korrekte Lage kann auch durch ein anderes Kennzeichen dargestellt werden. In Figur 12b ist hierzu ein mittig leuchtender Bereich 18.1 einer Anzeigeeinheit 18 dargestellt. In Figur 12c ist eine mittlere leuchtende LED 28.2 einer LED-Leiste 28 dargestellt.

Figur 13a zeigt wiederum den bereits beschriebenen Anzeigebereich 8.2 bei einer Lage der Nulldurchgänge N1, N2 außerhalb der zulässigen Bereiche B4 und B5. Wird dieser Zustand erkannt, so kann dies auch durch ein in Figur 13b dargestelltes Kennzeichen z.B. in Form von Pfeilen 18.2 und 18.3 angezeigt werden. In Figur 13c leuchten dementsprechend die zwei LED's 28.1 und 28.3 der LED-Leiste 28.

Figur 14a zeigt wiederum den bereits beschriebenen Anzeigebereich 8.2 bei einer Lage des Nulldurchganges N2 außerhalb des zulässigen Bereiches B5. Um den Bediener auch mit einer sehr kleinen Anzeige anzuzeigen, in welchem Bereich B5 oder B4 eine fehlerhafte Ausrichtung vorliegt, und um die Richtung zur Korrektur dieser Fehlausrichtung anzugeben, wird dies in der Anzeigeeinheit 18 durch einen nach rechts weisenden Pfeil 18.3 (Figur 14b) und bei der LED-Leiste 28 durch die rechts leuchtende LED 28.3 angezeigt. Wird eine entgegengesetzte Fehlausrichtung erkannt, so werden die Anzeigeeinheiten 8.2, 18 und 28 entsprechend den Figuren 15a, 15b, 15c betrieben.

Beliebige Kombinationen der beschriebenen Beispiele sind realisierbar.

Die Anzeigefelder 8 und 18 sind bevorzugt Flüssigkristall-Anzeigen, auch LCD genannt, die Erfindung ist aber auch mit Anzeigefeldern in Form von Fluoreszenzanzeigen, LED-Zeilen oder LED-Matrix realisierbar.

Die Erfindung ist bei Längen- sowie Winkelmeßsystemen einsetzbar. Die Abtastelemente können lichtelektrische Elemente, magnetische, kapazitive oder induktive Elemente sein.

Die Kontrollvorrichtung mit dem Anzeigefeld kann auch integraler Bestandteil des Abtastkopfes 3 selbst sein, so daß der Balken an einer Fläche des Abtastkopfes 3 angezeigt wird. Besonders vorteilhaft ist es, wenn die Lage des Referenzmarkensignals SR am Abtastkopf selbst angezeigt wird. Diese Anzeige kann insbesondere mit Anzeigeeinheiten gemäß den Figuren 12 bis 15 erfolgen.

Im Anzeigefeld können auch bestimmte Bereiche oder Werte farbig unterschiedlich dargestellt werden.

Die Mittel zur Verarbeitung der Abtastsignale S1, S2 und SR sind bevorzugt digitale Rechner (Mikroprozessor).

## Patentansprüche

1. Kontrollvorrichtung zur Kontrolle der Lage eines Abtastsignales (SR) einer Referenzmarke (12) relativ zu der Lage von gegeneinander phasenverschobenen Abtastsignalen (S1, S2) einer inkrementalen Teilung (2), **gekennzeichnet durch**

   - Mittel, welche die die Lage definierende Position(N1) einer ansteigenden und die die Lage definierende Position (N2) einer abfallenden Flanke eines Referenzmarkensignals (SR) relativ zu vorgegebenen Positionen ($\theta 0$, $\theta 1$, $\theta 2$, $\theta 3$, $\theta 4$) der gegeneinander phasenverschobenen Abtastsignale (S1, S2) ermitteln;
   - eine Anzeigeeinrichtung (8, 18, 28), mit der angezeigt wird, ob die ansteigende Flanke innerhalb eines vorgegebenen Bereiches ($\theta 3-\theta 1$) und davon unterscheidbar angezeigt wird, ob die abfallende Flanke innerhalb eines weiteren vorgegebenen Bereiches ($\theta 2-\theta 4$) liegt.

2. Kontrollvorrichtung nach Anspruch 1, **dadurch gekennzeichnet, daß** die Lage (N2-N1) des Referenzmarkensignals (SR) als Balken (13) auf einer Anzeigeeinrichtung (8) dargestellt wird, wobei das eine Ende des Balkens (13) die Position (N1) der ansteigenden Flanke und das andere Ende des Balkens (13) die Position (N2) der abfallenden Flanke des Referenzmarkensignals (SR) angibt.

3. Kontrollvorrichtung nach Anspruch 1 oder 2, **dadurch gekennzeichnet, daß** an der Anzeigeeinrichtung (8) Markierungen (G1 bis G4) aufgebracht oder angezeigt werden, die einen zulässigen Bereich (B4) für die ansteigende Flanke (N1) und einen zulässigen Bereich (B5) für die fallende Flanke (N2) definieren.

**4.** Kontrollvorrichtung nach einem der vorhergehenden Ansprüche 1 bis 3, **dadurch gekennzeichnet, daß** an der Anzeigeeinrichtung (18, 28) zwei Kennzeichen (18.2, 18,3; 28.1, 28.3) aktivierbar sind, wobei das erste Kennzeichen (18.2, 28.1) aktiviert wird, wenn die ansteigende Flanke außerhalb der vorgegebenen Positionen (θ3-θ1) liegt und das zweite Kennzeichen (18.3, 28.3) aktiviert wird, wenn die abfallende Flanke außerhalb der weiteren vorgegebenen Positionen (θ2-θ4) liegt.

**5.** Kontrollvorrichtung nach einem der Ansprüche 1 bis 4, **dadurch gekennzeichnet, daß** die Anzeigeeinrichtung (8, 18) eine Flüssigkristall-Anzeige ist.

**6.** Kontrollvorrichtung nach einem der Ansprüche 1 bis 5, **dadurch gekennzeichnet, daß** die Anzeigeeinrichtung (8, 18) in oder an den Abtastkopf (3) angeordnet ist.

**7.** Verfahren zur Kontrolle der Lage eines Abtastsignales (SR) einer Referenzmarke (12) relativ zu der Lage von gegeneinander phasenverschobenen Abtastsignalen (S1, S2) einer inkrementalen Teilung (2), **gekennzeichnet durch** folgende Verfahrensschritte:

a) Bestimmen von Lagepositionen (θ0, θ1, θ2, θ3, θ4) aus den phasenverschobenen Abtastsignalen (S1, S2),
b) Bestimmen jeweils einer die Lage bestimmenden Position (N1) der ansteigenden Flanke und einer die Lage bestimmenden Position (N2) der abfallenden Flanke des Referenzmarkensignals (SR) relativ zu den bestimmten Lagepositionen (θ0, θ1, θ2, θ3, θ4),
c) Anzeige eines ersten Kennzeichens (13; 18.2; 28.1), ob die ansteigende Flanke innerhalb eines **durch** die phasenverschobenen Abtastsignale (S1, S2) bestimmten Bereiches (θ1-θ3) liegt und
d) Anzeige eines zweiten Kennzeichens (13, 18.3; 28.3), ob die abfallende Flanke innerhalb eines **durch** die phasenverschobenen Abtastsignale (S1, S2) bestimmten Bereiches (θ2-θ4) liegt.

**Claims**

**1.** A monitoring device for checking the location of a sensing signal (SR) of a reference mark (12) relative to the location of sensing signals (S1, S2) of an incremental graduation (2) phase-shifted relative to one another, **characterized by**

- means which detect the position (N1) defining the location of a rising flank and the position (N2) defining the location of a falling flank of a reference mark signal (SR) relative to predetermined positions (θ0, θ1, θ2, θ3, θ4) if the sensing signals (S1, S2) phase-shifted relative to one another;
- a display device (8, 18, 28), on which is indicated whether the rising flanks are displayed within a predetermined range (θ3-θ1) and whether, distinguishable therefrom, the falling flanks lie within a further predetermined range (θ2-θ4).

**2.** A monitoring device according to claim 1, **characterized in that** the location (N2-N1) of the reference mark signal (SR) is represented as a bar (13) on a display device (8), where one end of the bar (13) denotes the position (N1) of the rising flank and the other end of the bar (13) denotes the position (N2) of the falling flank of the reference mark signal (SR).

**3.** A monitoring device according to claim 1 or 2, **characterized in that** markings (G1 to G4) are applied to or displayed on the display device and define a permissible range (B4) for the rising flank (N1) and a permissible range (B5) for the falling flank (N2).

**4.** A monitoring device according to any of the preceding claims 1 to 3, **characterized in that** two symbols (18.2, 18.3; 28.1, 28.3) can be activated on the display device (18, 28), wherein the first symbol (18.2, 28.1) is activated when the rising flank lies outside the predetermined positions (θ3-θ1) and the second symbol (18.3, 28.3) is activated when the falling flank lies outside the further predetermined positions (θ2-θ4).

**5.** A monitoring device according to any of claims 1 to 4, **characterized in that** the display device (8, 18) is a liquid crystal display.

**6.** A monitoring device according to any of claims 1 to 5, **characterized in that** the display device (8, 18) is arranged in or on the sensing head (3).

**7.** A method of monitoring the location of a sensing signal (SR) of a reference mark (12) relative to the location of sensing signals (S1, S2) of an incremental graduation (2) phase-shifted relative to one another, **characterized by** the following method steps:

a) determining positional locations (θ0, θ1, θ2, θ3, θ4) from the phase-shifted sensing signals (S1, S2),
b) determining each of a position (N1) determining the location of the rising flank and a position (N2) determining the location of the falling flank of the reference mark (SR) relative to the determined positional locations (θ0, θ1, θ2, θ3, θ4),

c) displaying a first symbol (13; 18.2; 28.1) indicating whether the rising flank lies within a range (θ1-θ3) determined by the phase-shifted sensing signals (S1, S2) and

d) displaying a second symbol (13; 18.3; 28.3) indicating whether the falling flank lies within a range (θ2-θ4) determined by the phase-shifted sensing signals (S1, S2).

## Revendications

1. Dispositif de contrôle pour le contrôle de la situation d'un signal de palpage (SR) d'une marque de référence (12) par rapport à la situation de signaux de palpage (S1, S2) mutuellement déphasés d'une division incrémentale (2), **caractérisé par**

des moyens qui déterminent les positions définissant la situation (N1) d'un flanc ascendant et la situation (N2) d'un flanc descendant d'un signal de marque de référence (SR) par rapport à des positions (θ0, θ1, θ2, θ3, θ4) prédéterminées des signaux de palpage (S1, S2) mutuellement déphasés ;

un dispositif d'affichage (8, 18, 28) par lequel on affiche si le flanc ascendant est situé à l'intérieur d'une zone prédéterminée (θ3-θ1) et, d'une manière différenciée, si le flanc descendant est situé à l'intérieur d'une autre zone prédéterminée (θ2-θ4).

2. Dispositif de contrôle selon la revendication 1, **caractérisé en ce que** la situation (N2-N1) du signal de marque de référence (SR) est représentée sous forme de barre (13) sur un dispositif d'affichage (8), l'une des extrémités de la barre (13) indiquant la position (N1) du flanc ascendant et l'autre extrémité de la barre (13) indiquant la position (N2) du flanc descendant du signal de marque de référence (SR).

3. Dispositif de contrôle selon la revendication 1 ou 2, **caractérisé en ce que** des repères (G1 à G4) sont appliqués ou sont affichés sur le dispositif d'affichage (8), qui définissent une zone admissible (B4) pour le flanc ascendant (N1) et une zone admissible (B5) pour le flanc descendant (N2).

4. Dispositif de contrôle selon une des revendications précédentes 1 à 3, **caractérisé en ce que** deux symboles (18.2, 18.3 ; 28.1, 28.3) peuvent être activés sur le dispositif d'affichage (18, 28), le premier symbole (18.2, 28.1) étant activé lorsque le flanc ascendant est situé à l'extérieur des positions prédéterminées (θ3-θ1) et le second symbole (18.3, 28.3) étant activé lorsque le flanc descendant est situé à l'extérieur des autres positions prédéterminées (θ2-θ4).

5. Dispositif de contrôle selon une des revendications précédentes 1 à 4, **caractérisé en ce que** le dispositif d'affichage (8, 18), est un dispositif d'affichage à cristaux liquides.

6. Dispositif de contrôle selon une des revendications précédentes 1 à 5, **caractérisé en ce que** le dispositif d'affichage (8, 18), est disposé dans ou sur la tête de palpage (3).

7. Procédé pour le contrôle de la situation d'un signal de palpage (SR) d'une marque de référence (12) par rapport à la situation de signaux de palpage (S1, S2) mutuellement déphasés d'une division incrémentale (2), **caractérisé par** les étapes suivantes qui consistent à :

a) déterminer des positions (θ0, θ1, θ2, θ3, θ4) à partir des signaux de palpage (S1, S2) mutuellement déphasés ;

b) déterminer une position définissant la situation (N1) du flanc ascendant et (N2) du flanc descendant du signal de marque de référence (SR) par rapport aux positions (θ0, θ1, θ2, θ3, θ4) déterminées;

c) afficher un premier symbole (13; 18.2, 28.1) si le flanc ascendant est situé à l'intérieur d'une zone prédéterminée (θ3-θ1) définie par les signaux de palpage (S1, S2) mutuellement déphasés

d) et afficher un second symbole (13; 18.3, 28.3) si le flanc descendant est situé à l'intérieur d'une zone prédéterminée (θ2-θ4) définie par les signaux de palpage (S1, S2) mutuellement déphasés.

FIG. 1

FIG. 2

FIG. 3

FIG. 4

## FIG. 5

## FIG. 6

## FIG. 7

FIG. 8

FIG. 9

FIG. 10

FIG. 11

FIG. 12

a) 13 8.2

b) 18.1 18

c) 28.2 28

FIG. 13

a) 13 8.2

b) 18.2 18.3 18

c) 28.1 28.3 28

FIG. 14

a) 13 8.2

b) 18.3 18

c) 28.3 28

FIG. 15

a) 13 8.2

b) 18.2 18

c) 28.1 28